# EUROPÄISCHE PATENTSCHRIFT

(11) **EP 2 003 616 B1**
(45) Veröffentlichungstag und Bekanntmachung des Hinweises auf die Patenterteilung: **23.12.2009**
(21) Anmeldenummer: 07110355.0
(22) Anmeldetag: 15.06.2007
(51) Int. Cl.: G06T 7/00

(54) **Computergestützte Gelenkanalyse mit Oberflächenprojektion**
Computer-assisted joint analysis with surface projection
Analyse d'orientation pilotée par informatique dotée d'une projection de surfaces

(43) Veröffentlichungstag der Anmeldung: 17.12.2008
(73) Patentinhaber: BrainLAB AG, 85622 Feldkirchen (DE)
(72) Erfinder: Haimerl, Martin, 82205, Gilching (DE); Tuma, Gregor, 81675, München (DE); Schindler, Florian, 80937, München (DE); Fricke, Marc, 85622, Feldkirchen (DE)
(74) Vertreter: Schwabe - Sandmair - Marx

(56) Entgegenhaltungen:
- WO-A-2004/010385
- JUNTONG XI ET AL: "Shape analysis and parameterized modeling of hip joint" TRANSACTIONS OF THE ASME. JOURNAL OF COMPUTING AND INFORMATION SCIENCE IN ENGINEERING ASME USA, Bd. 3, Nr. 3, September 2003 (2003-09), Seiten 260-265, XP009092401 ISSN: 1530-9827
- JIAMIN LIU ET AL: "Model-based 3D segmentation of the bones of joints in medical images" PROCEEDINGS OF THE SPIE - THE INTERNATIONAL SOCIETY FOR OPTICAL ENGINEERING SPIE-INT. SOC. OPT. ENG USA, Bd. 5747, Nr. 1, 2005, Seiten 1793-1803, XP007903546 ISSN: 0277-786X
- SIEBERT M ET AL: "System for three-dimensional biomechanical analysis of joints" PROCEEDINGS OF THE SPIE - THE INTERNATIONAL SOCIETY FOR OPTICAL ENGINEERING SPIE-INT. SOC. OPT. ENG USA, Bd. 4683, 2002, Seiten 476-483, XP007903548 ISSN: 0277-786X

## Beschreibung

Die Erfindung betrifft ein Verfahren zur computergestützten Gelenkanalyse. Basierend auf dem erfindungsgemäßen Verfahren können unterschiedlichste Bestimmungen und Evaluierungen für das Gelenk durchgeführt werden, einschließlich einer Kollisionsdetektion (Erfassung von Knochenkollisionen im Gelenk), einer Planung für Gelenkbehandlungsverfahren sowie einer Formanalyse für bestimmte Gelenkelemente.

Um eine computergestützte Gelenkanalyse durchführen zu können, werden - wie bei Ausführungsformen der vorliegenden Erfindung - mittels eines medizintechnischen bildgebenden Verfahrens Volumenbilddatensätze der Gelenkumgebung erstellt, beispielsweise CT-, MR-, oder Röntgen-Volumenbilddatensätze. Die tatsächliche, dreidimensionale Kontur und Form von Gelenkelementen, wie z.B. Knochen, kann durch computergestützte Bildbearbeitung, nämlich durch eine sogenannte Segmentierung bestimmt werden, wenn von dem Patientenvolumen Bilddatensätze erfasst werden. Wenn andere, z.B. künstliche Gelenkelemente mit einzubeziehen sind, können entsprechende dreidimensionale Abbildungsdaten auch als bekannte oder vorgegebene Modelldaten bereitgestellt werden, beispielsweise als CAD-Modell für ein Implantat.

Herkömmlicherweise werden Analysen des Gelenks, die z.B. die Kollisionsdetektion betreffen, auf der Basis der mit obigen Mitteln erhaltenen dreidimensionalen Gelenkdaten durchgeführt. Solche Analysen gestalten sich einerseits rechnerisch sehr aufwändig, andererseits ist eine Visualisierung des Ergebnisses in leicht erfassbarer Form kaum möglich. Bei herkömmlichen Gelenkanalysen, deren Ergebnisse nach der Verarbeitung der Datensätze in dreidimensionaler Form vorliegen, ist es beispielsweise schwierig darzustellen, wo bei bestimmten Gelenkpositionen Knochenkollisionen vorkommen. Für Maßnahmen zur Korrektur der Knochenoberfläche können aus den erhaltenen 3D-Bilddaten nur spezielle Merkmale verwendet werden, was die Eingriffsplanung ungenau macht. Der Umgang mit den dreidimensionalen Daten bei einer computergestützten Gelenkanalyse macht außerdem entsprechende verwendete Algorithmen relativ langsam, unstabil und problematisch im Hinblick auf die Berücksichtigung von Weichgewebsstrukturen im Gelenkbereich.

In der Druckschrift von Juntong Xi et al.: "Shape analysis and parameterized modeling of hip joint" werden verschiedene (u.a. sphärische und ellipsoide) Hüllen an die ermittelte 3D-Oberfläche einer Hüftknochenkugel angepasst und nachfolgend der jeweilige Anpassungsfehler bestimmt. Das dabei ermittelte Resultat zeigt, dass ein Rotationsellipsoid die beste Annäherung an die tatsächliche Form des Hüftknochens darstellt.

Die vorliegende Erfindung soll Abhilfe für die oben genannten Probleme schaffen. Insbesondere soll sie eine computergestützte Gelenkanalyse ermöglichen, die gut visualisierbare Ergebnisse hervorbringt und eine robuste, schnelle und zuverlässige Datenverarbeitung für viele Gelenkarten ermöglicht.

Diese Aufgabe wird durch ein Verfahren zur computergestützten Gelenkanalyse gemäß dem Anspruch 1 gelöst. Die Unteransprüche, deren Inhalt hier durch Bezugnahme aufgenommen wird, definieren bevorzugte Ausführungsformen der Erfindung sowie spezielle Anwendungen der erfindungsgemäßen Idee.

Gemäß der Erfindung wird ein Verfahren zur computergestützten Gelenkanalyse mit den folgenden Schritten bereitgestellt:
a) ein dreidimensionaler Abbildungsdatensatz, speziell ein Volumenbilddatensatz der Gelenkumgebung wird bereitgestellt, insbesondere mittels eines medizintechnischen bildgebenden Verfahrens erstellt;
b) die Gelenkelemente werden im Datensatz identifiziert und der Form nach bestimmt, insbesondere mittels eines computergestützten Bildsegmentierungsverfahrens;
c) computergestützt wird eine dreidimensionale Abbildung mindestens eines Gelenkelements bestimmt bzw. berechnet;
d) eine Referenzfläche für das Gelenkelement wird bestimmt;
e) anhand von Punktpositions-Korrespondenzen wird die dreidimensionale Abbildung des Gelenkelements auf die Referenzfläche projiziert; und
f) die Projektion wird zur weiteren Auswertung ausgegeben und/oder gespeichert.

Mit anderen Worten reduziert die vorliegende Erfindung das Verarbeitungsproblem für die erhaltenen Abbildungsdaten der Gelenkelemente auf die zweidimensionale Ebene, nämlich durch Projektion der benötigten Abbildungsdaten auf die Referenzfläche. Wenn die charakteristischen Daten für das Gelenk in dieser Weise verarbeitet worden sind, kann einerseits die Feststellung bestimmter Mängel oder Zustände am Gelenk in robuster, schneller und sehr allgemein gültiger Weise durch relativ einfache Betrachtungen der projizierten Abbildungen geschehen, andererseits hilft die zweidimensionale Natur der erhaltenen Daten natürlich bei der Visualisierung, also bei der visuellen Ausgabe für diejenigen, welche eine Behandlung planen.

Die Erfindung wird nun detailliert und anhand verschiedener Ausführungsformen und Anwendungsfälle erläutert. Sie kann alle hierin beschriebenen Merkmale einzeln sowie in jedweder sinnvollen Kombination umfassen. In den beiliegenden Zeichnungen zeigen:
- Figur 1: ein Schema für die Verwendung der vorliegenden Erfindung bei einer projektionsbasierten Kollisionsdetektion für ein Hüftgelenk; und
- Figuren 2 und 3: ein Schema für die Verwendung eines erfindungsgemäßen Verfahrens bei der Formanalyse von Gelenkelementen in einem Hüftgelenk.

Für alle hierin beschriebenen Ausführungsformen und Anwendungsfälle der vorliegenden Erfindung gilt, dass die verarbeiteten Objekte (Gelenkelemente) eine Art 3D-Abbildung besitzen oder dass für sie eine solche 3D-Abbildung erstellt wird, beispielsweise ein Oberflächenmodell, ein Voxelmodell oder ähnliches. Bei medizinischen Anwendungen kann dies durch die Segmentierung der relevanten Objekte in einem CT-, MR- oder Röntgen-Volumendatensatz erreicht werden. Alternativ können solche 3D-Abbildungen aus bestimmten Arten von 3D-Modellen bereitgestellt werden, beispielsweise aus CAD-Modellen für bekannte Implantate aus Körper-Atlanten, wobei im letzteren Fall eine Anpassung auf die tatsächliche Größe durchgeführt werden kann.

Ein mathematisches Modell der Gelenkbewegung hilft dabei, idealisierte Bewegungsoberflächen zu berechnen, die dazu verwendet werden, kritische Bereiche zu errechnen. Idealisierte Bewegungsoberflächen können für jedes einzelne Objekt berechnet werden; sie werden hierin auch "Grenzflächen" genannt, denn sie repräsentieren die Grenzlinien, welche von den Objekten bzw. Gelenkelementen nicht überschritten werden sollen. Sie hängen von dem jeweiligen Bewegungsmodell ab; beispielsweise wird die idealisierte Oberfläche für ein Kugelgelenk durch eine Kugel repräsentiert, die als Mittelpunkt und Radius den Mittelpunkt des Gelenk-Kugelkörpers und dessen Radius besitzt. Solche Kugeloberflächen - oder jedwede andere idealisierten Bewegungsoberflächen bzw. Grenzflächen - können interaktiv definiert oder automatisch berechnet werden, z.B. indem eine Kugelfläche in einem Gelenkkopf, eine Gelenkpfanne oder dazwischen einbeschrieben wird. Jede Struktur, welche eine solche Grenzfläche, beispielsweise die Kugelfläche übertritt, kann als kritischer Bereich eingewertet werden. Die Konkavität bzw. Konvexität der Objekte muss in Betracht gezogen werden. Beispielsweise sind für die Kugelseite eines Hüftgelenks (Femurseite) die äußeren Teile relevant, während für die Pfannenseite (Hüftgelenkspfanne) die inneren Teile relevant sind. Die kritischen Bereiche können ebenfalls durch eine andere, manuelle oder automatische Prozedur definiert werden; beispielsweise können für die Hüftgelenkspfanne die Randpunkte bzw. der innere Teil der Gelenkpfanne (der durch die Randpunkte begrenzt ist) als kritischer Bereich Verwendung finden. Die Randpunkte können automatisch erfasst oder interaktiv definiert werden.

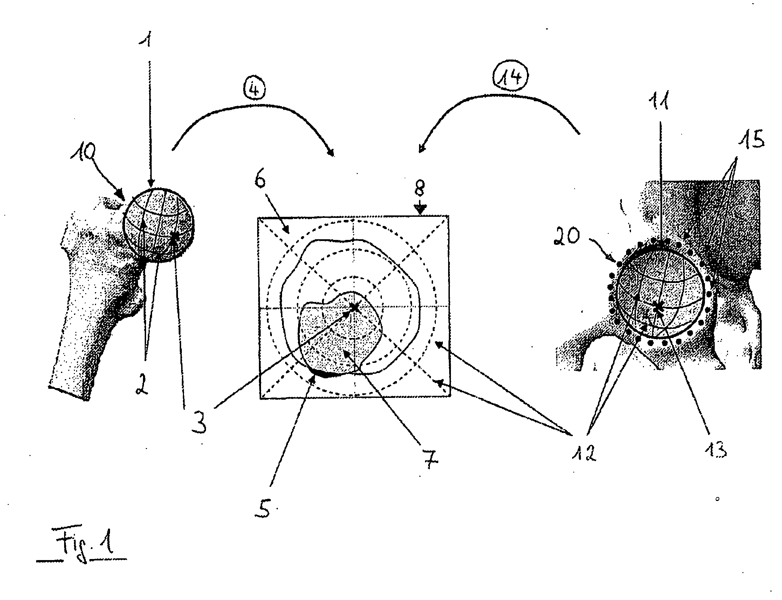

Beispiele für die Einbeschreibung solcher kugelförmiger Grenzflächen sind in den Figuren 1 bis 3 dargestellt, wo jeweils die einbeschriebenen Kugeln 1, 11, 21 und 31 für Gelenkköpfe 10 und Gelenkpfannen 20 dargestellt sind. Die Verwendung dieser einbeschriebenen Kugeln (Grenzflächen) wird im Weiteren bei der Erörterung einzelner Ausführungsvarianten bzw. Anwendungsfälle noch detaillierter erörtert.

Die Referenzfläche, auf die eine dreidimensionale Abbildung mindestens eines Gelenkelements im Rahmen der vorliegenden Erfindung projiziert wird, kann jedwede Oberfläche sein, die eine solche Projektion gestattet. In den Figuren 1 bis 3 ist die Referenzfläche jeweils mit den Bezugszeichen 8, 28 und 38 aufgezeigt; auch hierauf wird später noch detaillierter eingegangen. Die Projektion muss die Korrespondenz von Punktpositionen der Objekte berücksichtigen, die in den Prozess involviert sind. Für jede betrachtete Stellung des Gelenks können dabei die folgenden Schritte durchgeführt werden: Die involvierten Objekte werden auf die Referenzoberfläche projiziert. Die Referenzoberfläche kann individuell für jede Stellung des Gelenks neu berechnet werden. Die Projektion kann jedwedes Verfahren sein, welches die Objekt-Oberflächen oder Teile der Objekt-Oberflächen auf die Referenzfläche überträgt. Tiefeninformation, beispielsweise der Abstand des Objekts zu einer gemeinsamen Zwischenfläche oder der speziellen idealisierten Bewegungsfläche/Grenzfläche können ebenfalls errechnet und auf die Referenzfläche übertragen werden. Die Transformation muss nicht eindeutig sein.

Beispielsweise kann die folgende Transformation verwendet werden: Korrespondierende Referenzpunkte und Richtungen auf jeder der Objekt-Oberflächen und auf der Referenzoberfläche werden definiert. Für jeden Punkt auf der Objekt-Oberfläche wird der Oberflächenabstand und die Richtung bezüglich des Referenzpunktes errechnet. Derselbe Abstand und dieselbe Richtung werden verwendet, um den entsprechenden Punkt auf der Referenzoberfläche zu bestimmen.

Für ein Hüftgelenk ist dieses Verfahren in Figur 1 gezeigt, wobei die Projektionen als Pfeile mit dem Bezugszeichen 4 und 14, jeweils für den Gelenkkopf und die Gelenkpfanne, bezeichnet sind. Das Bezugszeichen 1 zeigt die Grenzfläche bzw. die idealisierte Bewegungsfläche als Kugel um den Gelenkkopf 10 eines Oberschenkelknochens. Koordinatenlinien auf der Kugel 1 sind mit dem Bezugszeichen 2 gekennzeichnet und entsprechende Referenzpunkte auf der gemeinsamen Referenzfläche 8 und der Kugel 1 tragen das Bezugszeichen 3.

Entsprechend sind die Grenzfläche 11, Koordinatenlinien 12 und der Referenzpunkt 13 für die Hüftgelenkspfanne 20 auf der rechten Seite der Figur 1 eingetragen. Zusätzlich sind noch die Hüftgelenks-Randpunkte mit dem Bezugszeichen 15 angedeutet.

Die in Figur 1 mittig dargestellte Projektion auf die gemeinsame Referenzoberfläche 8 zeigt beim Bezugszeichen 6 den kritischen Oberschenkelbereich und beim Bezugszeichen 7 den kritischen Gelenkpfannenbereich. Der Stoß-, Kollisions- oder Überlappungsbereich 5 zwischen diesen Bereichen ist ebenfalls gekennzeichnet; auf dessen Erfassung und Verwertung im Rahmen der vorliegenden Erfindung wird später noch detaillierter eingegangen.

Die momentane Stellung des Hüftgelenks (relative Orientierung von Oberschenkelknochen und Becken) wird bei den Berechnungen zur Projektionstransformation berücksichtigt, was bedeutet, dass die Referenzpunkte und -richtungen demgemäß transformiert bzw. übertragen werden müssen.

Alternativ könnte eine Kugelform, die zwischen den Bewegungsoberflächen des Oberschenkelkopfes und der Gelenkpfanne liegt, als Referenzoberfläche verwendet werden. In diesem Fall kann eine Projektion auf der Basis der kürzesten Abstände benutzt werden, wobei aber die zweidimensionalen Berechnungen etwas komplizierter werden. Deshalb ist eine weitere Projektion auf eine flache Ebene hilfreich. Für die Situation, die in Figur 1 dargestellt ist, kann die Projektion auf eine Zwischen-Kugel verwendet werden, um korrekte Punktkorrespondenzen sicherzustellen.

### Kollisions-Detektion:

Ein Anwendungsfall für das erfindungsgemäße Verfahren ist eine projektionsbasierte Kollisions-Detektion, die im Weiteren eingehender beschrieben wird. Kollisions-Detektions-Analysen versuchen im Allgemeinen festzustellen, ob zwei oder mehr Objekte, die in einem dreidimensionalen Raum definiert sind, miteinander kollidieren, d.h. ob sie eine nicht-leere Schnittmenge aufweisen. Gewöhnlich wird dies durch Standard-Intersektions-Berechnungen im 3D-Raum durchgeführt, die durch angepasste Strategien für den Zugriff auf die Volumendaten optimiert werden können.

Bei der vorliegenden Erfindung werden die dreidimensionalen Abbildungsdaten, speziell die Volumendaten auf eine spezifizierte Referenzfläche projiziert, und die Intersektions-Berechnung wird auf der zweidimensionalen Ebene durchgeführt (eventuell mit zusätzlicher Tiefen-Information). Wenn eine Überlappung zwischen den projizierten Volumen auf der 2D-Ebene stattfindet und ein Vergleich der Tiefen-Information ebenfalls eine Überlappung erbringt, wird eine Kollision festgestellt.

Bei natürlichen Gelenken, beispielsweise menschlichen Gelenken wie dem Hüftgelenk, verhindern Weichgewebe eine Abnutzung der involvierten Strukturen. Sobald dieses weiche Zwischengewebe durch Verringerung des Knochenabstands im Randbereich des Gelenks zusammengedrückt wird, wird die Gelenkbewegung hierdurch beeinflusst. Ein solcher Vorgang sollte ebenfalls als eine Kollision bzw. ein Stoß angesehen und behandelt werden. Es ist möglich, dies durch den Kollisions-Detektions-Ansatz gemäß der vorliegenden Erfindung zu erfassen.

Es müssen nur die Teile des Gelenks in Betracht gezogen werden, wo die involvierten Strukturen eine idealisierte Bewegungsoberfläche (Grenzfläche) übertreten.

Dieser Ansatz kann anhand des Hüftgelenks demonstriert werden. Das Hüftgelenk kann als ein annäherungsweise kugelförmiges Gelenk betrachtet werden, und unter der Annahme idealisierter bogenförmiger Oberflächen sind die folgenden Strukturen für die Detektion von Kollisionen bzw. Stößen relevant: Für den Oberschenkel (konvexer Bestandteil des Gelenks) sind die Strukturen relevant, welche eine Kugelform überschreiten, die an den Gelenkkopf/Oberschenkelkopf angepasst wird. Für das Becken ist der Rand der Gelenkpfanne, wo die Knochenstrukturen die Kugelform verlassen, relevant. Die Durchmesser der involvierten Kugelformen unterscheiden sich durch die Dicke des dazwischen liegenden Weichgewebes (z.B. Labrum, Knorpelstrukturen). Nun können diese Strukturen auf eine gemeinsame Referenzfläche projiziert werden, und ein Stoß bzw. eine Kollision wird dann festgestellt, wenn eine Überlappung zwischen den projizierten Oberschenkel-Oberflächenteilen und dem projizierten Gelenkpfannen-Rand stattfindet. Dieser Fall ist in der Figur 1 dargestellt, wo auf der mittleren Projektion (gemeinsame Referenzfläche) der Abschnitt 5 als Überlappungsabschnitt dunkel gekennzeichnet ist. Die Tiefe ist in diesem Fall nicht berücksichtigt, sie kann als Indikator für die Schwere der Kollision verwendet werden.

Für andere Gelenke können andere idealisierte Bewegungsoberflächen bzw. Grenzflächen relevant sein. Beispielsweise ist für ein Kniegelenk eine zylindrische Oberfläche verwendbar. Speziell eignet sich die vorliegende Erfindung für die Planung von Behandlungen zur Korrektur der Knochenoberflächen. Für jede Stellung des Gelenks kann erfasst werden, welche Teile der involvierten Knochen abgetragen werden müssen, um die gewünschte Konfiguration zu erhalten. Die Erfindung kann ebenfalls dafür verwendet werden, den Bewegungsspielraum für den Fall von Gesamt-Hüftersatzbehandlungen zu analysieren bzw. für die Analyse von Implantaten.

Existierende Kollisions-Detektionen ziehen nur einen direkten Kontakt von Knochenstrukturen in Betracht; Zwischengewebe wird nicht berücksichtigt. Dies führt üblicherweise zu einer Überschätzung des Bewegungsspielraums oder des zu erwartenden Bewegungsspielraums nach einer Behandlung. Wegen der Reduktion auf zweidimensionale Berechnungen ist die erfindungsgemäße Kollisionserfassung im Vergleich zu solchen herkömmlichen Ansätzen effizienter. Zusätzlich ist sie bezüglich der Rechenabläufe robuster, was eine ungenaue Ausrichtung der Elemente des Gelenks angeht. Wenn beispielsweise das Zentrum des Oberschenkelkopfes nicht exakt mit dem Zentrum der Hüftgelenkspfanne übereinstimmt, führt dies bei herkömmlichen Ansätzen zu unrichtigen Resultaten. Speziell können eine Anzahl falsch erfasster Kollisionen auftreten, wenn die Objekte sehr nahe beieinander liegen. Änderungen in der Gelenkstellung können aufgrund von kleinen Unregelmäßigkeiten der segmentierten Knochenoberflächen zu vielen Zwischenkollisionen führen. Die Erfindung erfasst die Strukturabweichungen für jeden Teil des Gelenks separat, und dadurch führen Fehlausrichtungen nicht direkt zu Beeinflussungen der Resultate, und die Detektion wird insgesamt robuster. Auch Unregelmäßigkeiten in der Objekt-Oberfläche beeinflussen die Resultate nicht in so weitgehendem Umfang. Die Zuverlässigkeit einer erfassten Kollision kann durch die Verwendung von Tiefen-Informationen eingewertet werden, wie detaillierter bei der Beschreibung der nächsten Ausführungsform bzw. des nächsten Anwendungsfalls der Erfindung erörtert wird.

Ein Ablauf für eine gerade beschriebene Kollisions-Anwendung im Rahmen der vorliegenden Erfindung könnte verfahrensmäßig der folgende sein:
1. 3D-Abbildungen der involvierten Objekte werden errechnet (bildgebende Verfahren plus Segmentierung);
2. optional werden kritische Bereiche errechnet (Bereiche, wo die Objekte ihre idealisierten Bewegungs-Oberflächen/Grenzflächen verlassen);
3. für jede relevante Konfiguration bzw. Gelenkstellung werden die folgenden Schritte durchgeführt:
4. Berechnung der dreidimensionalen Abbildungen aller einzelnen Objekte (Gelenkelemente, CAD-Modelle, Segmentierungsdaten etc.);
5. Projizieren aller Objekte auf eine Referenzoberfläche; und
6. Berechnung von Überlappungen der projizierten Objekte auf der Referenzsoberfläche; und insbesondere ein Vergleich von Tiefenwerten.

Für verschiedene Konfigurationen bzw. Gelenkstellungen werden die Schritte 4 bis 6 wiederholt.

### Projektionsbasierte Planung/Visualisierung:

Eine weitere Anwendung der Erfindung ist die Planung von Gelenkoperationen auf der Basis der Projektionsansichten, insbesondere die Bereitstellung eines Werkzeuges zur Visualisierung der Funktionalität und der Mängel eines Gelenks. Bei herkömmlichen 3D-Abbildungen der Gelenkelemente bzw. der Gelenkknochen ist es schwierig zu visualisieren, wo Knochenkollisionen auftreten und wie schwer sie sind.

Der Bewegungsspielraum eines Gelenks kann aufgrund von Knochenanomalien eingeschränkt sein, was zu einer erhöhten Abnutzung des Gelenks (Knochen oder Weichgewebe) und in der Folge zu Arthritis führen kann. Eine frühe chirurgische Intervention kann dabei helfen, solche Anomalien zu korrigieren. Die vorliegende Erfindung kann zur Planung sowie zur Unterstützung solcher chirurgischen Eingriffe verwendet werden, für Überprüfungen der Gelenkfunktionalität sowie zur Optimierung von Implantatpositionen.

Zu diesem Zweck visualisiert die Erfindung in einer Ausführungsvariante die Funktionalität des Gelenks, indem Tiefen-Informationen oder die kritischen Bereiche für die involvierten Objekte in eine Referenzfläche projiziert werden. Dabei werden für jeden Punkt auf den bogenförmigen Oberflächen der involvierten Objekte Tiefenwerte errechnet und auf die Referenzfläche übertragen. Die Projektion berücksichtigt die Korrespondenz von Punktpositionen der in Frage kommenden Objekte (Gelenkelemente, wie dies oben schon erläutert wurde). Ein Konflikt (beispielsweise eine Überlappung) der Tiefenwerte verweist auf eine potentielle Kollision bzw. einen potentiellen Stoß zwischen den Gelenkelementen. Die Position der Kollision kann dadurch geklärt werden, dass ein geeignetes Koordinatensystem auf der Referenzfläche angezeigt wird. Die Schwere oder Häufigkeit bzw. Zuverlässigkeit solcher Kollisionen kann durch Tiefenwerte betont werden, beispielsweise durch eine Farbkodierung.

Es gibt verschiedene Möglichkeiten für die Berechnung der Tiefenwerte, z.B. Abstände von einer Zwischen-Bewegungsoberfläche (z.B. eine Kugel, die zwischen den Elementen eines Kugelgelenks liegt) oder Abstände zu einer idealisierten Bewegungsoberfläche (z.B. Kugel an einem Element eines Kugelgelenks), wobei die Bewegungsoberflächen oder Grenzflächen individuell für jedes in Frage kommende Objekt berechnet werden können. Wenn die Tiefenwerte die Abstände zu einer gemeinsamen Referenzfläche repräsentieren, wird immer dann eine Kollision festgestellt, wenn die Tiefen an irgendeinem Punkt überlappen. Wenn die Tiefenwerte den Abstand zur idealisierten Bewegungsoberfläche/Grenzfläche repräsentieren, wird eine Kollision immer dann festgestellt, wenn die Tiefen einen kritischen Wert überschreiten. In diesem Fall kann die Tiefeninformation verwendet werden, um die Häufigkeit/Zuverlässigkeit oder die Schwere der erfassten Kollision zu beschreiben.

Wie schon erwähnt, können die Tiefenwerte farbkodiert werden, um die Häufigkeit/Zuverlässigkeit oder Schwere der Kollision zu visualisieren. Jedes einzelne oder auch alle involvierten Gelenkelemente können verwendet werden, um Kollisionen zu bewerten. Basierend auf den Ergebnissen kann die Planung eines Eingriffs manipuliert werden, und zwar interaktiv oder automatisch; kritische Bereiche der Gelenkbewegung, Landmarken oder Resektionsvolumina können definiert oder eingestellt werden. Die Position von Implantaten kann optimiert werden, und Teile der Objekte können virtuell entfernt werden (z.B. für das Planen von Hüftgelenkseingriffen) bzw. verschoben oder gedreht (z.B. für das Planen von Osteotomie-Eingriffen). Eine neue Stellung des Gelenks kann ausgewählt und der Prozess iteriert werden, um die Planung zu verbessern oder zu verfeinern, und auch die Auswahl der neuen Gelenkstellung kann interaktiv oder automatisch stattfinden. Die Position von Implantaten kann geplant, überprüft und eingestellt werden, und all diese Vorgänge können virtuell simuliert und überprüft werden. Die Erfassung von Kollisionen wird durch die Verwendung unterschiedlicher Verfahren für die Tiefenberechnung robuster, indem beispielsweise die Abstände zu einer idealisierten Bewegungsoberfläche separat für jedes involvierte Objekt berechnet werden. Im letzteren Fall kann ein Zusammendrücken eines Zwischen-Weichgewebes oder eines Knorpels als Kollision eingewertet werden. Weil die Kollisionserfassung nicht so sehr von dem Vorhandensein eines perfekt konzentrischen Gelenks abhängt, beeinflussen deformierte Gelenke oder Ungenauigkeiten bei den erfassten Gelenkparametern (z.B. Drehzentrum) die Resultate nicht genauso stark wie bei herkömmlichen Verfahren, wo viele falsch erfasste Zwischen-Kollisionen auftreten können.

Gemäß diesem Aspekt stellt die Erfindung also ein Werkzeug zur Verfügung, welches mit Hilfe einer sehr vorteilhaften Visualisierung zeigt, in welchen Bereichen und Gelenkstellungen Kollisionen auftreten. Es wird möglich, eine detaillierte Analyse der Funktionalität des Gelenks durchzuführen und einen Eingriff zu planen, um diese Funktionalität zu optimieren, wobei der Eingriff ein Gesamt-Hüftersatz ebenso sein kann wie eine Oberflächenanpassung oder eine Teil-Neuformung des Gelenks. Dabei kann auch der Bewegungsspielraum (Range Of Motion, ROM) optimiert werden.

Ein Verfahrensablauf für den gerade beschriebenen Aspekt der vorliegenden Erfindung (Kollisionserfassung; Visualisierung; Eingriffsplanung) kann der folgende sein:
1. Berechnung von dreidimensionalen Abbildungen der involvierten Objekte (Gelenkelemente);
2. optional: Berechnung kritischer Bereiche (Bereiche, wo die Objekte ihre idealisierte Bewegungsoberfläche verlassen);
3. für jede in Betracht gezogene Konfiguration/Stellung des Gelenks:
4. Berechnung von dreidimensionalen Abbildungen jedes einzelnen Objekts (CAD-Modelle, Segmentierungsdaten, etc.);
5. Projizieren aller Objekte und Tiefenwerte auf eine Referenzfläche;
6. Visualisierung von Überlappungen der projizierten Objekte auf der Referenzfläche (z.B. mit Farbkodierung von kritischen Tiefenwerten);
7. Speichern, Analysieren oder Manipulieren der Daten für die weitere Planung oder Optimierung (unter Umständen mit Verwendung von zusätzlichen Informationen oder Visualisierungen); und
8. optional: (interaktives) Manipulieren der Planungsdaten basierend auf den Daten und Ergebnissen.

Wie beschrieben können die Schritte 4. bis 8. für jede Gelenkstellung bzw. Gelenkkonfiguration wiederholt bzw. iteriert werden.

### Projektionsbasierte Formanalyse:

Ein weiterer Aspekt bzw. Anwendungsfall der vorliegenden Erfindung liegt in der projektionsbasierten Formanalyse für kurvenförmige Oberflächen von Gelenken, die ihre Anwendung insbesondere auch bei der Korrektur oder Repositionierung von Gelenkelementen findet.

Wie schon eingangs erwähnt verwenden herkömmliche Techniken für die Korrektur oder Repositionierung von Teilen eines Gelenks nur spezifische dreidimensionale Merkmale der relevanten Knochen (z.B. eine Ebene, welche die Gelenkpfannenebene für Beckenosteotomien annähert). Für Hüftgelenkseingriffe gibt es einige Versuche, virtuelle Bewegungsspielräume zu erfassen, um Abnormalitäten in der Knochenfunktionalität festzustellen. Diese Ansätze betrachten aber das gesamte Gelenk als ein einziges Objekt. Sie können nicht unterscheiden, welches Gelenkelement für die abnormale Funktionalität verantwortlich ist.

Mit der schon oben beschriebenen, projektionsbasierten Gelenkanalyse kann aber auch eine Formanalyse auf der zweidimensionalen Ebene durchgeführt werden. Unterschiedliche Form-Modellierungstechniken (z.B. statistische Formmodelle, PDMs, geometrische Merkmale, Fourier-Deskriptoren, etc.) können verwendet werden, um die Formen darzustellen und zu analysieren. Die Berechnung der standardisierten Formen sowie der Vergleich individueller Formen mit diesen Referenzformen kann durchgeführt werden. Für den Vergleich der Formen ist es möglich, die Formen zu registrieren, um sie zueinander auszurichten, beispielsweise mit der Berechnung einer optimalen Ausrichtung für eine Osteotomie oder einer Vorausrichtung, um weitere detaillierte Formvergleiche anzustellen. Zusätzlich kann man lokale Deformationen der Formen oder Berechnungen geometrischer Formunterschiede verwenden, um die Formen im Detail zu vergleichen. Es ist möglich, die erfassten Unterschiede zur Definition von Bereichen zur Knochenentfernung zu nutzen, und die Wichtigkeit bestimmter Bereiche kann durch Tiefenwerte oder Formunterschiede eingewertet werden, wobei entschieden wird, welche Teile welcher Gelenke entfernt werden müssen. Die erhaltenen Werte können ebenfalls dazu verwendet werden, den Ausrichtungsprozess zu gewichten oder die Berechnung spezieller Referenzpositionen in den Objekten vorzunehmen.

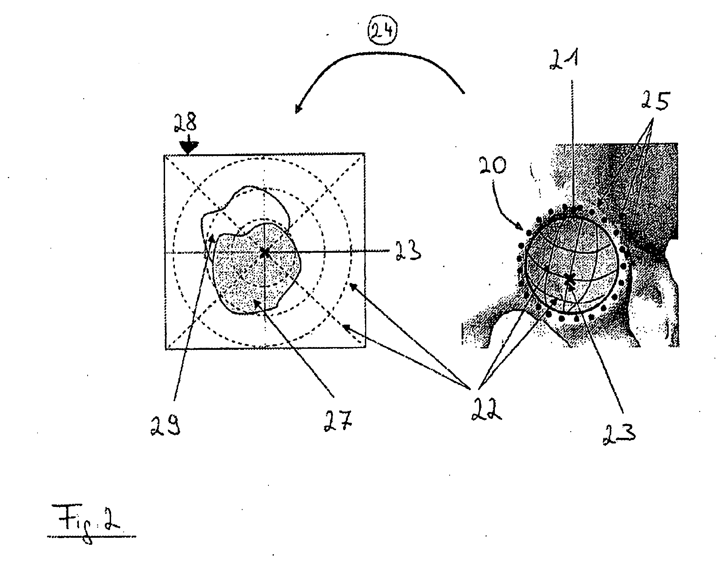

In der Figur 2 wird beispielhaft eine Projektion gemäß der vorliegenden Erfindung dargestellt, wie sie bei einer Formanalyse Verwendung findet, wobei eine falsche Ausrichtung erkennbar ist. Nach der Projektion 24, die so durchgeführt werden kann, wie es oben im Einzelnen beschrieben worden ist, sind auf der Referenzfläche 28 die übertragenen Koordinatenlinien 22 und der übertragene Referenzpunkt 23 sichtbar, und insbesondere auch eine Referenzform 29 und die individuelle, falsch ausgerichtete Form 27. Durch die Darstellung mit der Referenzfläche 28 ist also die Art und die Schwere der Fehlausrichtung unmittelbar erkennbar.

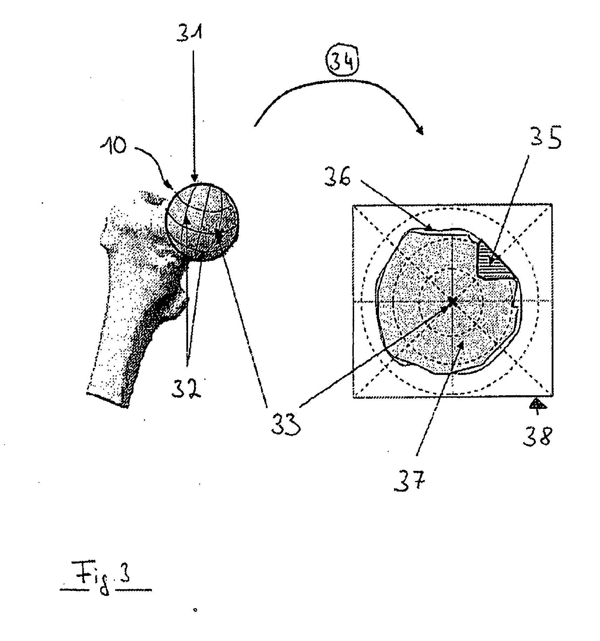

Die Figur 3 zeigt ein Beispiel für die Feststellung von Formunterschieden; auch hier werden durch die Projektion 34 Koordinatenlinien 32 und ein Referenzpunkt 33 auf eine Referenzfläche 38 übertragen. Auf der Referenzfläche 38 sind projiziert der kritische Bereich eines Standard-Oberschenkelkopfes zu sehen, der das Bezugszeichen 36 erhalten hat, sowie der kritische Bereich des individuellen, mangelhaften Femurkopfes mit dem Bezugszeichen 37. Im hervorgehobenen Bereich 35 ist dann der wesentliche Formunterschied zwischen individuellem und Standard-Femurkopf aufgezeigt und visualisiert.

Die Merkmale, die durch die Formanalyse errechnet werden, sind beispielsweise dazu zu verwenden, normale Situationen und Krankheitsmuster zu kategorisieren; jedenfalls kann auf einer Vergleichsgrundlage über einen speziellen Eingriff entschieden werden oder dieser Eingriff geplant werden. Die erhaltenen Merkmale können weiterverarbeitet oder klassifiziert werden, und zwar durch Signalverarbeitung oder eine Musteranalyse bzw. ein Muster-Zuordnungsverfahren.

Eine erfindungsgemäße Formanalyse kann einseitig sein (beispielsweise zur Berechnung der Ausrichtung der Hüftgelenkspfanne) oder zweiseitig (beispielsweise zum Vergleich von Kollisionsbereichen, welche aus einem unrichtigen Knochenkontakt bei einer bestimmten Gelenkstellung resultieren). Auch können die Koordinatensysteme für die Projektionsoberflächen individuell oder in Kombination berücksichtigt werden; beispielsweise ist es für eine Beckenosteotomie üblicherweise ausreichend, die Fehlausrichtung der Hüftgelenkspfanne gegenüber dem Gelenkpfannenrand zu analysieren. Für andere Zwecke kann die relative Position des Femurkopfes in der Hüftgelenkspfanne in unterschiedlichen Stellungen des Gelenks relevant sein. Der aktuelle Bewegungsspielraum sowie der erreichbare Bewegungsspielraum können ebenfalls in diesem Rahmen analysiert werden, und es ist möglich, die Formunterschiede abhängig von der Gelenkstellung bzw. der Gelenkkonfiguration zu analysieren.

Die Erfindung macht es möglich, alle Daten in den Projektionsansichten zu visualisieren. Wie bei dem vorher beschriebenen Aspekt der vorliegenden Erfindung können Tiefenwerte farbkodiert werden, um die Häufigkeit/Zuverlässigkeit und Schwere von Kollisionen zu visualisieren. Auch alle anderen vorgeschlagenen Maßnahmen, die oben im Einzelnen erläutert wurden, sind durchführbar, wie die Berücksichtigung aller oder eines einzelnen Objektes, die Verbesserung oder Manipulation einer Eingriffsplanung, die Definition kritischer Bereiche, die Optimierung von Implantatpositionen, die virtuelle Entfernung, Verschiebung oder Rotation von Objekteilen und die interaktive oder automatische Selektion neuer Gelenkkonfigurationen bzw. neuer Gelenkstellungen.

Gemäß diesem Aspekt der vorliegenden Erfindung (Formanalyse) wird eine vollständigere und genauere Korrektur- oder Repositionierungsplanung möglich, die notwendige Korrektur oder Repositionierung kann automatisch berechnet und optimiert werden, und außerdem können Unterschiede zwischen einem standardisierten Modell und der individuellen Situation visualisiert werden. Es ist möglich, automatisch zu erfassen, ob der Hauptteil der Knochenabnormalität sich auf dem einen oder anderen Gelenkelement (Femur, Becken) befindet, oder auf beiden Seiten. Eine automatische Planung kann durchgeführt werden, welche alle Teile definiert, die auf dem jeweiligen Gelenkelement, z.B. dem Femur oder dem Becken entfernt werden müssen.

Ganz allgemein gesagt kann automatisch eine Hilfe bei der Feststellung gegeben werden, welcher Typ von Mangel oder Abnormalität für ein Gelenk vorliegt. Basierend auf dieser Information kann dann eine Entscheidung über den notwendigen Eingriff erleichtert werden.

Ein Verfahrensablauf für den oben beschriebenen Aspekt der Erfindung (Formanalyse) ist beispielsweise der folgende:
1. Berechnung von dreidimensionalen Abbildungen der involvierten Objekte (Gelenkelemente);
2. optional: Berechnung kritischer Bereiche (Bereiche, wo die Objekte bzw. Gelenkelemente ihre idealisierte Bewegungsoberfläche verlassen);
3. für jede betrachtete Gelenkkonfiguration bzw. Gelenkstellung:
4. Berechnung der dreidimensionalen Abbildungen der einzelnen Objekte (CAD-Modelle, Segmentierungsdaten, etc.);
5. Projizieren der Objekte auf eine Referenzfläche;
6. Berechnung der Formparameter;
7. Vergleich/Klassifizierung der Formparameter.

Die Schritte 4. bis 7. können für einzelne Gelenkstellungen bzw. Gelenkkonfigurationen iteriert bzw. wiederholt werden.

## Patentansprüche

1. Verfahren zur computergestützten Gelenkanalyse mit den folgenden Schritten:
a) ein dreidimensionaler Abbildungsdatensatz, speziell ein Volumenbilddatensatz der Gelenkumgebung wird bereitgestellt, insbesondere mittels eines medizintechnischen bildgebenden Verfahrens erstellt;
b) die Gelenkelemente werden im Datensatz identifiziert und der Form nach bestimmt, insbesondere mittels eines computergestützten Bildsegmentierungsverfahrens;
c) computergestützt wird eine dreidimensionale Abbildung mindestens eines Gelenkelements bestimmt bzw. berechnet;
d) eine Referenzfläche für das Gelenkelement wird bestimmt;
e) anhand von Punktpositions-Korrespondenzen wird die dreidimensionale Abbildung des Gelenkelements auf die Referenzfläche projiziert; und
f) die Projektion wird zur weiteren Auswertung ausgegeben und/oder gespeichert.

2. Verfahren nach Anspruch 1, bei dem die Schritte c) bis f) jeweils abfolgend für unterschiedliche Gelenkstellungen durchgeführt werden.

3. Verfahren nach Anspruch 1 oder 2, bei dem die Referenzfläche für eine neue Gelenkstellung neu bestimmt wird.

4. Verfahren nach einem der Ansprüche 1 bis 3, bei dem als Referenzfläche eine mindestens einem Gelenkelement zuordnungsfähige, dreidimensionale Fläche bestimmt wird.

5. Verfahren nach einem der Ansprüche 1 bis 4, bei dem als Referenzfläche eine gemeinsame Referenzfläche für mindestens zwei Gelenkelemente bestimmt wird.

6. Verfahren nach einem der Ansprüche 1 bis 5, bei dem als Referenzfläche eine dreidimensionale Fläche bestimmt wird, die zwischen den die Bewegung bestimmenden Oberflächen zweier Gelenkelemente liegt.

7. Verfahren nach einem der Ansprüche 1 bis 6, bei dem die Projektion der dreidimensionalen Gelenkelement-Abbildung(en) auf die Referenzfläche zur Ausgabe einer Bildwiedergabe zweidimensional umgesetzt wird, insbesondere durch eine weitere Projektion auf eine ebene Fläche.

8. Verfahren nach einem der Ansprüche 1 bis 7, bei dem anhand der zweidimensionalen Projektion Überlappungszonen von projizierten Gelenkelementen festgestellt und als Kollisionsstelle(n) bzw. Kollisionszonen für eine jeweilige Gelenkstellung bestimmt werden.

9. Verfahren nach einem der Ansprüche 1 bis 8, bei dem computergestützt eine mindestens einem Gelenkelement zuordnungsfähige, idealisierte und dreidimensionale Grenzfläche, insbesondere als idealisierte Bewegungsfläche, bestimmt wird.

10. Verfahren nach Anspruch 9, bei dem die Grenzfläche aus den Bilddaten des segmentierten Volumendatensatzes bestimmt wird.

11. Verfahren nach Anspruch 9 oder 10, bei dem die Grenzfläche aus angepassten Körperatlasdaten und/oder bereitstehenden Konturdaten für Implantate bestimmt wird.

12. Verfahren nach einem der Ansprüche 9 bis 11, bei dem Abweichungen der Kontur der Gelenkelemente von der Grenzfläche bestimmt und als kritische Bereiche für das jeweilige Gelenkelement identifiziert werden.

13. Verfahren nach einem der Ansprüche 9 bis 12, bei dem mittels Datenverarbeitungsverfahren, insbesondere Segmentierungsverfahren oder allgemeiner Optimierungsverfahren, die kritischen Bereiche als zusammenhängende Objekte unter Berücksichtigung von Nebenbedingungen, wie Glattheit von Grenzkonturen, Bewertung bestimmter Bereiche, Distanz zu Standardwerten für die Position kritischer Bereiche, ermittelt werden.

14. Verfahren nach einem der Ansprüche 8 bis 13, bei dem bei einer Ausgabe der Projektion die Kollisionszonen und/oder kritischen Bereiche aufgezeigt werden.

15. Verfahren nach einem der Ansprüche 1 bis 14, bei dem Tiefeninformationen für Punktpositionen auf einem Gelenkelement, insbesondere der Abstand von Gelenkelement-Oberflächenpunkten von der Referenzfläche oder der Grenzfläche, auf die Projektion übertragen werden.

16. Verfahren nach Anspruch 15, bei dem die Tiefeninformationen bei einer Kollisionsdetektion verwertet werden, wobei:
- bei der Bestimmung der Tiefeninformation aus dem Abstand eines Gelenkelement-Oberflächenpunktes von der Referenzfläche, eine Kollision festgestellt wird, wenn die Tiefenwerte für zwei Gelenkelemente überlappen;
- bei der Bestimmung der Tiefeninformation aus dem Abstand eines Gelenkelement-Oberflächenpunktes von der Grenzfläche, eine Kollision festgestellt wird, wenn ein Tiefenwert einen kritischen Wert übersteigt, wobei aus der Größe des Tiefenwerts auf die Häufigkeit und Schwere der Kollision geschlossen wird.

17. Verfahren nach einem der Ansprüche 1 bis 16, bei dem bei einer graphischen Ausgabe der Projektion Kollisionsstellen bzw. Kollisionszonen graphisch herausgestellt gekennzeichnet werden, insbesondere farblich gekennzeichnet, speziell je nach Häufigkeit oder Schwere der Kollision unterschiedlich herausgestellt oder gefärbt.

18. Verfahren nach einem der Ansprüche 8 bis 17, bei dem die tatsächliche Position von Kollisionsstelle(n) bzw. Kollisionszonen durch das Einbeschreiben eines Koordinatensystems in die Referenzfläche ermittelt wird.

19. Verfahren nach einem der Ansprüche 1 bis 14, bei dem die Ermittlung der Tiefeninformationen und ihre Auswertung für unterschiedliche Gelenkstellungen durchgeführt werden.

20. Verfahren nach einem der Ansprüche 1 bis 19, bei dem die graphischen Darstellungen der projizierten Daten entweder für einzelne oder für alle Gelenkteile interaktiv oder automatisch manipuliert werden.

21. Verfahren nach einem der Ansprüche 1 bis 20, bei dem die ermittelten Daten über die Gelenkelemente und/oder Kollisionstelle(n) bzw. Kollisionszonen gespeichert, analysiert oder manipuliert werden, um als Planungsdaten für eine medizintechnische Navigationsunterstützung oder als Evaluierungsdaten für eine Bewegungsspielraum-Analyse bereitgestellt zu werden.

22. Verfahren nach einem der Ansprüche 1 bis 21, bei dem aus den projizierten Daten dreidimensionale Volumen für kritische Gelenkelemente/-bereiche rekonstruiert werden.

23. Verfahren nach einem der Ansprüche 1 bis 22, bei dem eine virtuelle Bearbeitung der Gelenkselemente vorgenommen und in die Analyse der Daten eingebracht wird, um die Folgen möglicher Veränderungen abzuschätzen.

24. Verfahren nach einem der Ansprüche 1 bis 23, bei dem der Projektion der Gelenkelement-Abbildung eine entsprechende Projektion eines Formmodells zugeordnet bzw. überlagert wird.

25. Verfahren nach Anspruch 24, bei dem das Formmodell ein standardisiertes Gelenkelement-Modell oder ein Modell mit einer typischen Krankheitsausprägung ist.

26. Verfahren nach einem der Ansprüche 1 bis 25, bei dem die Gelenkelement-Abbildung automatisch einem optimal passenden Formmodell aus einem vorgegebenen Satz an Modellen mit typischen Ausprägungen zugeordnet wird.

27. Verfahren nach einem der Ansprüche 24 bis 26, bei dem eine Registrierung für das Formmodell und das Gelenkelement durchgeführt wird, um die gegenseitige Ausrichtung zu erzielen oder eine gewünschte Ausrichtung darzustellen.

28. Verfahren nach einem der Ansprüche 24 bis 27, bei dem eine Formanalyse für das Gelenkelement auf der Basis der zweidimensionalen Projektionen des Gelenkelements und des Formmodells durchgeführt wird.

29. Verfahren nach einem der Ansprüche 24 bis 28, bei dem bei der Formanalyse auch die ermittelten Tiefeninformationen mit einbezogen werden.

30. Verfahren nach einem der Ansprüche 24 bis 29, bei dem aufgrund der Formanalyse Ausrichtungsparameter und/oder Konturparameter des Gelenkelements in Bezug auf das Formmodell festgestellt werden.

31. Verfahren nach einem der Ansprüche 24 bis 30, bei dem die Formmodell-Zuordnung bzw. Überlagerung und ihre Auswertung für unterschiedliche Gelenkstellungen durchgeführt werden.

32. Verfahren nach einem der Ansprüche 1 bis 31, bei dem das Gelenk ein Hüftgelenk ist und
- die Gelenkelemente ein Ober Schenkelkopf, eine Hüftgelenkspfanne oder ein Implantat für diese Elemente sind;
- die Referenzfläche und/oder die Grenzfläche kugelförmig sind.

33. Verfahren nach einem der Ansprüche 1 bis 31, bei dem das Gelenk ein Kniegelenk ist und
- die Gelenkelemente ein distaler Femurkopf, ein proximaler Tibiakopf oder ein Implantat für diese Elemente sind;
- die Referenzfläche und/oder die Grenzfläche zylinderförmig sind.

34. Programm, das, wenn es auf einem Computer läuft oder in einem Computer geladen ist, den Computer veranlasst, ein Verfahren gemäß einem der Ansprüche 1 bis 33 durchzuführen.

35. Computerprogramm-Speichermedium, das ein Programm nach Anspruch 34 aufweist.

## Claims

1. A method for computer-assisted joint analysis, comprising the following steps:
a) a three-dimensional imaging data set - specifically a volume image data set - of the joint environment is provided, in particular produced by means of a medical imaging method;
b) the joint elements are identified in the data set and determined in terms of their shape, in particular by means of a computer-assisted image segmenting method;
c) a three-dimensional image of at least one joint element is determined or calculated with computer assistance;
d) a reference area for the joint element is determined;
e) on the basis of point position correspondences, the three-dimensional image of the joint element is projected onto the reference area; and
f) the projection is outputted and/or stored for further evaluation.

2. The method according to claim 1, wherein Steps c) to f) are performed sequentially for different joint positions, respectively.

3. The method according to claim 1 or 2, wherein the reference area is re-determined for a new joint position.

4. The method according to any one of claims 1 to 3, wherein a three-dimensional area which can be assigned to at least one joint element is determined as the reference area.

5. The method according to any one of claims 1 to 4, wherein a common reference area for at least two joint elements is determined as the reference area.

6. The method according to any one of claims 1 to 5, wherein a three-dimensional area which lies between the surfaces of two joint elements determining the motion is determined as the reference area.

7. The method according to any one of claims 1 to 6, wherein the projection of the three-dimensional joint element image(s) onto the reference area is two-dimensionally converted in order to output an image rendition, in particular by another projection onto a plane area.

8. The method according to any one of claims 1 to 7, wherein on the basis of the two-dimensional projection, overlap zones of projected joint elements are ascertained and determined as collision location(s) or collision zones for a respective joint position.

9. The method according to any one of claims 1 to 8, wherein an idealised three-dimensional border area which can be assigned to at least one joint element is determined, in particular as an idealised motion area, with computer assistance.

10. The method according to claim 9, wherein the border area is determined from the image data of the segmented volume data set.

11. The method according to claim 9 or 10, wherein the border area is determined from adapted body atlas data and/or available contour data for implants.

12. The method according to any one of claims 9 to 11, wherein deviations of the contour of the joint elements from the border area are determined and identified as critical regions for the respective joint element.

13. The method according to any one of claims 9 to 12, wherein by means of data processing methods, in particular segmentation methods or general optimisation methods, the critical regions are ascertained as related objects by taking into account ancillary conditions such as the smoothness of border contours, the rating of particular regions and the distance from standard values for the position of critical regions.

14. The method according to any one of claims 8 to 13, wherein the collision zones and/or critical regions are indicated in an output of the projection.

15. The method according to any one of claims 1 to 14, wherein depth information for point positions on a joint element, in particular the distance of joint element surface points from the reference area or border area, is transferred onto the projection.

16. The method according to claim 15, wherein the depth information is utilised in collision detection, wherein:
- when determining the depth information from the distance of a joint element surface point from the reference area, a collision is ascertained when the depth values for two joint elements overlap;
- when determining the depth information from the distance of a joint element surface point from the border area, a collision is ascertained when a depth value exceeds a critical value, wherein the frequency and severity of the collision is deduced from the size of the depth value.

17. The method according to any one of claims 1 to 16, wherein in a graphic output of the projection, collision locations or collision zones are graphically highlighted, in particular marked in colour, and specifically highlighted or coloured differently depending on the frequency or severity of the collision.

18. The method according to any one of claims 8 to 17, wherein the actual position of collision location(s) or collision zones is ascertained by inscribing a co-ordinate system into the reference area.

19. The method according to any one of claims 1 to 14, wherein the depth information is ascertained and evaluated for different joint positions.

20. The method according to any one of claims 1 to 19, wherein the graphic representations of the projected data are interactively or automatically manipulated either for individual joint parts or for all the joint parts.

21. The method according to any one of claims 1 to 20, wherein the ascertained data concerning the joint elements and/or collision location(s) or collision zones are stored, analysed or manipulated, in order to be provided as planning data for medical navigation assistance or as evaluation data for a range-of-motion analysis.

22. The method according to any one of claims 1 to 21, wherein three-dimensional volumes for critical joint elements / joint regions are reconstructed from the projected data.

23. The method according to any one of claims 1 to 22, wherein virtual processing of the joint elements is performed and incorporated into the analysis of the data, in order to estimate the consequences of possible changes.

24. The method according to any one of claims 1 to 23, wherein the projection of the joint element image is superimposed with or assigned a corresponding projection of a shape model.

25. The method according to claim 24, wherein the shape model is a standardised joint element model or a model having a typical disease characteristic.

26. The method according to any one of claims 1 to 25, wherein the joint element image is automatically assigned to an optimally fitting shape model from a predetermined set of models having typical characteristics.

27. The method according to any one of claims 24 to 26, wherein the shape model and the joint element are registered, in order to obtain the reciprocal alignment or show a desired alignment.

28. The method according to any one of claims 24 to 27, wherein a shape analysis is performed for the joint element on the basis of the two-dimensional projections of the joint element and the shape model.

29. The method according to any one of claims 24 to 28, wherein the ascertained depth information is also incorporated into the shape analysis.

30. The method according to any one of claims 24 to 29, wherein alignment parameters and/or contour parameters of the joint element in relation to the shape model are ascertained on the basis of the shape analysis.

31. The method according to any one of claims 24 to 30, wherein the shape model is assigned and/or superimposed and evaluated for different joint positions.

32. The method according to any one of claims 1 to 31, wherein the joint is a hip joint, and:
- the joint elements are a femoral head, an acetabulum or an implant for these elements;
- the reference area and/or border area are spherical.

33. The method according to any one of claims 1 to 31, wherein the joint is a knee joint, and:
- the joint elements are a distal femoral head, a proximal tibial head or an implant for these elements;
- the reference area and/or border area are cylindrical.

34. A program which, when it is running on a computer or is loaded onto a computer, causes the computer to perform a method in accordance with any one of claims 1 to 33.

35. A computer program storage medium which comprises a program according to claim 34.

## Revendications

1. Procédé d'analyse d'articulation assistée par ordinateur comportant les étapes suivantes :
a) on prépare un ensemble de données de représentation tridimensionnelle, plus particulièrement un ensemble de données d'image de volumes de la région de l'articulation, en particulier au moyen d'un procédé d'imagerie médicale ;
b) on identifie les éléments de l'articulation dans l'ensemble de données et on les détermine suivant la forme, en particulier au moyen d'un procédé de segmentation d'image assisté par ordinateur ;
c) on détermine ou calcule, de manière assistée par ordinateur, une représentation tridimensionnelle d'au moins un élément d'articulation ;
d) on détermine une surface de référence pour l'élément d'articulation ;
e) on projette la représentation tridimensionnelle de l'élément d'articulation sur la surface de référence à l'aide de correspondances de positions ponctuelles ;
f) on édite et/ou mémorise la projection pour une exploitation ultérieure.

2. Procédé selon la revendication 1 dans lequel les étapes c) à f) sont exécutées successivement chaque fois pour différentes positions de l'articulation.

3. Procédé selon l'une quelconque des revendications 1 ou 2 dans lequel la surface de référence est déterminée à nouveau pour une nouvelle position de l'articulation.

4. Procédé selon l'une quelconque des revendications 1 à 3 dans lequel on détermine comme surface de référence une surface tridimensionnelle pouvant être associée à au moins un élément d'articulation.

5. Procédé selon l'une quelconque des revendications 1 à 4 dans lequel on détermine comme surface de référence une surface de référence commune pour au moins deux éléments d'articulation.

6. Procédé selon l'une quelconque des revendications 1 à 5 dans lequel on détermine comme surface de référence une surface tridimensionnelle qui se situe entre les surfaces déterminant le mouvement de deux éléments d'articulation.

7. Procédé selon l'une quelconque des revendications 1 à 6 dans lequel on convertit en deux dimensions la projection de la(des) représentation(s) tridimensionnelle(s) de l'élément d'articulation sur la surface de référence pour la sortie d'une reproduction d'image, en particulier par une autre projection sur une surface plane.

8. Procédé selon l'une quelconque des revendications 1 à 7 dans lequel on établit, à l'aide de la projection bidimensionnelle, des zones de recouvrement d'éléments d'articulation projetés et on les définit comme point(s) de collision ou zones de collision pour une position d'articulation respective.

9. Procédé selon l'une quelconque des revendications 1 à 8 dans lequel on détermine, de manière assistée par ordinateur, une surface limite idéale et tridimensionnelle, pouvant être associée à au moins un élément d'articulation, en particulier en tant que surface de déplacement idéale.

10. Procédé selon la revendication 9 dans lequel on détermine la surface limite à partir des données d'image de l'ensemble segmenté de données de volume.

11. Procédé selon l'une quelconque des revendications 9 ou 10 dans lequel on détermine la surface limite à partir de données adaptées de charge corporelle et/ou de données de contour disponibles pour des implants.

12. Procédé selon l'une quelconque des revendications 9 à 11 dans lequel on détermine des écarts du contour des éléments d'articulation par rapport à la surface limite et on les identifie comme zones critiques pour l'élément d'articulation respectif.

13. Procédé selon l'une quelconque des revendications 9 à 12 dans lequel on détermine, au moyen de procédés de traitement de données, en particulier de procédés de segmentation ou de procédés généraux d'optimisation, les zones critiques en tant qu'objets continus en tenant compte de conditions secondaires, telles que la planéité de contours limites, l'évaluation de zones déterminées, l'écart par rapport à des valeurs standard pour la position de zones critiques.

14. Procédé selon l'une quelconque des revendications 8 à 13 dans lequel, lors d'une sortie de la projection, on indique les zones de collision et/ou les zones critiques.

15. Procédé selon l'une quelconque des revendications 1 à 14 dans lequel on transfère sur la projection des informations de profondeur pour des positions ponctuelles sur un élément d'articulation, en particulier la distance de points superficiels d'un élément d'articulation par rapport à la surface de référence ou à la surface limite.

16. Procédé selon la revendication 15 dans lequel on exploite les informations de profondeur lors d'une détection de collision, dans lequel :
- on constate une collision, lors de la détermination de l'information de profondeur à partir de la distance entre un point superficiel d'élément d'articulation et la surface de référence, lorsque les valeurs de profondeur de deux éléments d'articulation se recouvrent ;
- on constate une collision, lors de la détermination de l'information de profondeur à partir de la distance entre un point superficiel d'élément d'articulation et la surface limite, lorsqu'une valeur de profondeur dépasse une valeur critique, et on déduit la fréquence et la gravité de la collision à partir de la grandeur de la valeur de profondeur.

17. Procédé selon l'une quelconque des revendications 1 à 16 dans lequel, lors d'une sortie graphique de la projection, on souligne graphiquement, en particulier on marque en couleur, des points ou zones de collision, tout spécialement on les souligne ou colore différemment suivant la fréquence ou la gravité de la collision.

18. Procédé selon l'une quelconque des revendications 1 à 17 dans lequel on détermine la position effective d'un point (de points) de collision ou de zones de collision par inscription d'un système de coordonnées dans la surface de référence.

19. Procédé selon l'une quelconque des revendications 1 à 14 dans lequel on procède à la détermination des informations de profondeur et à leur interprétation pour différentes positions d'articulation.

20. Procédé selon l'une quelconque des revendications 1 à 19 dans lequel on manipule de manière interactive ou automatique les représentations graphiques des données projetées soit pour quelques unes, soit pour toutes les parties d'articulation.

21. Procédé selon l'une quelconque des revendications 1 à 20 dans lequel on mémorise, analyse ou manipule les données déterminées relatives aux éléments d'articulation et/ou point(s) ou zones de collision, afin de les préparer comme données de planification pour un assistance à la navigation médicale ou comme données d'évaluation pour une analyse de liberté de mouvement.

22. Procédé selon l'une quelconque des revendications 1 à 21 dans lequel on reconstruit des volumes tridimensionnels pour des éléments/zones d'articulation critiques, à partir des données projetées.

23. Procédé selon l'une quelconque des revendications 1 à 22 dans lequel on procède à un traitement virtuel des éléments d'articulation et on l'introduit dans l'analyse des données afin d'évaluer les conséquences d'éventuelles variations.

24. Procédé selon l'une quelconque des revendications 1 à 23 dans lequel on associe ou superpose à la projection de la représentation d'élément d'articulation une projection correspondante d'un modèle de forme.

25. Procédé selon la revendication 24 dans lequel le modèle de forme est un modèle standard d'élément d'articulation ou un modèle avec la manifestation caractéristique d'une pathologie.

26. Procédé selon l'une quelconque des revendications 1 à 25 dans lequel on associe automatiquement la représentation d'élément d'articulation à un modèle de forme adapté de manière optimale à partir d'un ensemble prédéfini de modèles avec des manifestations caractéristiques.

27. Procédé selon l'une quelconque des revendications 24 à 26 dans lequel on procède à un enregistrement du modèle de forme et de l'élément d'articulation afin de d'obtenir l'orientation réciproque ou de représenter une orientation voulue.

28. Procédé selon l'une quelconque des revendications 24 à 27 dans lequel on procède à une analyse de forme pour l'élément d'articulation sur la base des projections bidimensionnelles de l'élément d'articulation et du modèle de forme.

29. Procédé selon l'une quelconque des revendications 24 à 28 dans lequel on inclut aussi les informations de profondeur obtenues dans l'analyse de forme.

30. Procédé selon l'une quelconque des revendications 24 à 29 dans lequel on établit des paramètres d'orientation et/ou paramètres de contour de l'élément d'articulation en référence au modèle de forme, sur la base de l'analyse de forme.

31. Procédé selon l'une quelconque des revendications 24 à 30 dans lequel on procède à la corrélation ou superposition du modèle de forme et à son interprétation pour différentes positions d'articulation.

32. Procédé selon l'une quelconque des revendications 1 à 31 dans lequel l'articulation est une articulation de la hanche et
- les éléments d'articulation sont une tête de fémur, une glène de la hanche ou un implant pour ces éléments ;
- la surface de référence et/ou la surface limite sont de forme sphérique.

33. Procédé selon l'une quelconque des revendications 1 à 31 dans lequel l'articulation est une articulation du genou et
- les éléments d'articulation sont une tête de fémur distale, une tête de tibia proximale ou un implant pour ces éléments ;
- la surface de référence et/ou la surface limite sont de forme cylindrique.

34. Programme qui, lorsqu'il tourne sur un ordinateur ou est chargé dans un ordinateur, fait exécuter à l'ordinateur un procédé selon l'une quelconque des revendications 1 à 33.

35. Support de mémoire de programme d'ordinateur qui comporte un programme selon la revendication 34.
